Europäisches Patentamt

European Patent Office

Office européen des brevets

(11) Veröffentlichungsnummer: **0 381 949**
**A1**

## (12) EUROPÄISCHE PATENTANMELDUNG

(21) Anmeldenummer: **90100760.9**

(22) Anmeldetag: **15.01.90**

(51) Int. Cl.⁵ **H04L 1/02**

(30) Priorität: **01.02.89 EP 89101724**

(43) Veröffentlichungstag der Anmeldung:
**16.08.90 Patentblatt 90/33**

(84) Benannte Vertragsstaaten:
**AT BE CH DE DK ES FR GB GR IT LI NL SE**

(71) Anmelder: **Siemens Aktiengesellschaft**
**Wittelsbacherplatz 2**
**D-8000 München 2(DE)**

(72) Erfinder: **Ringelhaan, Otmar, Dipl.-Ing.**
**Zugspitzstrasse 9**
**D-8919 Greifenberg(DE)**

(54) **Diversity-Kombinator.**

㊵ Die Erfindung bezieht sich auf einen Kombinator für die Empfangssignale verschiedener Signalwege einer digitalen Funk-, insbesondere Mobilfunkeinrichtung. Ein solcher Kombinator soll so ausgestaltet werden, daß er auch bei Breitbandsystemen den energetisch maximalen Gewinn ermöglicht und auch bei Systemen mit diskontinuierlicher Übertragung anwendbar ist.

Die Erfindung sieht hierzu vor, daß in jedem Signalweg in Reihe mit einem Frequenzumsetzer ein Korrelator und nachfolgend eine Metrik-Tabelle eingeschaltet ist zur Ermittlung des jeweiligen Streckenmodells der im Empfänger als Transversalfilter modellierten Strecke. Die dabei gebildeten Ausgangswerte werden für die weitere Verarbeitung in einem Viterbi-Demodulator zu einem Summenwert zusammengefaßt.

EP 0 381 949 A1

## Diversity-Kombinator

Die Erfindung bezieht sich auf einen Kombinator für die Empfangssignale verschiedener Signalwege einer digitalen Funk-, insbesondere Mobilfunkeinrichtung, bei dem die einzelnen Empfangssignale nach der üblichen Frequenzumsetzung gemeinsam demoduliert werden.

Beim Funk, insbesondere Mobilfunk, kann die Übertragung durch Mehrwegeempfang gestört sein. Solch ein Mehrwegeempfang bewirkt allgemein eine Frequenzabhängigkeit des Übertragungsfaktors, die als selektiver Schwund in Erscheinung tritt.

Bei sog. Schmalbandsystemen, also bei Systemen mit verhältnismäßig geringer Übertragungsbandbreite ist der Übertragungsfaktor einer gegebenen Verbindung innerhalb deren Übertragungsbandbreite nahezu konstant. Wechselnde Ausbreitungsbedingungen verursachen lediglich Pegelschwankungen des Empfangssignals, weshalb sich Signale von verschiedenen Antennen ohne größere Probleme gewinnbringend überlagern lassen. Diese Überlagerung (Addition) geschieht meist in einer ZF-Lage, wobei eine Regelung der Phasen der einzelnen Demodulationsträger zueinander dafür sorgt, daß die einzelnen ZF-Signale miteinander zur Deckung kommen. Man spricht in diesem Zusammenhang von "equal gain" bzw. "maximal ratio combining", was sich auf eine eventuelle Bewertung der einzelnen Signale bezieht.

Solch ein (quasi-) linearer Diversity-Combiner ist grundsätzlich auch bei Breitbandsystemen anwendbar. Allerdings muß hier aber damit gerechnet werden, daß innerhalb des Übertragungsbandes der jeweilige Übertragungsfaktor nicht konstant ist, weshalb wechselnde Ausbreitungsbedingungen auch Schwankungen der dann vorhandenen Signalverzerrungen verursachen. Werden nun unterschiedlich verzerrte Signale überlagert, so können trotz Regelung der Demodulationsträgerphasen die einzelnen Signale nur unvollständig zur Deckung gebracht werden, weshalb so auch nicht der energetisch mögliche Diversity-Gewinn erzielt werden kann.

Bei diesem Verfahren der (quasi-) linearen Überlagerung muß jedenfalls eine gewisse Übereinstimmung der zu überlagernden Signale herbeigeführt werden. Die in diesem Zusammenhang erforderlichen Kriterien werden üblicherweise laufend aus einem Vergleich der beteiligten Signale abgeleitet, was bei kontinuierlicher Übertragung kein unlösbares Problem darstellt. Bei diskontinuierlichem Betrieb hingegen, wie er beispielsweise für den künftigen paneuropäischen Mobilfunk vorgesehen ist, ist dies nichtohne weiteres möglich. Hier können nämlich aufeinanderfolgende Impulsbündel völlig unterschiedliche Verzerrrungen aufweisen, weshalb jedes Impulsbündel individuell behandelt werden muß. Ein a priori Kriterium für einen Regelvorgang in obigem Sinne steht demnach nicht zur Verfügung.

Zum Stand der Technik jener "diversity-combiner" wird auf das Buch "Mobile Communications Engineering" von W.C.Y.Lee, erschienen 1982 im Verlag McGraw-Hill, Seiten 291 ff verwiesen.

Der Erfindung liegt die Aufgabe zugrunde, einen Diversity-Combiner zu schaffen, der auch bei Breitbandsystemen den energetisch maximalen Gewinn ermöglicht und auch bei Systemen mit diskontinuierlicher Übertragung anwendbar ist.

Diese Aufgabe wird gemäß der Erfindung in der Weise gelöst, daß in jedem Signalweg in Reihe mit einem Frequenzumsetzer ein Korrelator und nachfolgend eine Metrik-Tabelle eingeschaltet ist zur Ermittlung des jeweiligen Streckenmodells der im Empfänger als Transversalfilter modellierten Strecke, indem von den Modellen jedes Empfangsweges die möglichen Ausgangsspannungswerte ermittelt und zusammengehörige Spannungswerte unter derselben Adresse abgelegt werden und im Verlauf der Übertragung von den bei den verschiedenen Empfängern anfallenden Signalwerten die Quadrate der Abstände zu deren abgelegten Spannungswerten berechnet und unter gleicher Adresse entstandene Quadrate der verschiedenen Empfangswege für die weitere Verarbeitung in einem Viterbi - Demodulator zu einem Summenwert zusammengefaßt werden.

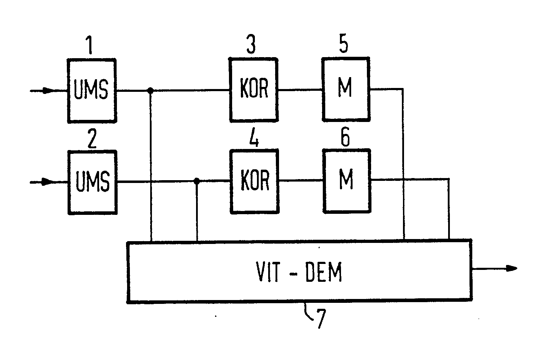

Nachstehend wird die Erfindung anhand eines in der Zeichnung dargestellten Ausführungsbeispiels näher erläutert.

Ausgangspunkt für den erfindungsgemäßen Kombinator ist ein Empfänger mit Viterbi-Demodulation. Ein solcher Empfänger eignet sich vorzugsweise zur Demodulation von Signalen, die durch Mehrwegeempfang verzerrt worden sind. Im Gegensatz zu Empfängern, bei denen versucht wird mit Hilfe eines zur Strecke inversen Vierpols die Signalverzerrung zu beseitigen, wird hier auf Grund der Kenntnis der Impulsantwort der Strecke aus dem verzerrten Empfangssignal die wahrscheinlichste Sendefolge ermittelt. Zu diesem Zweck wird die Strecke im Empfänger als Transversalfilter modelliert, und alle jene Spannungswerte berechnet, die dieses Filtere abgeben kann. Bei binärer Übertragung und einer Strecke, die als Filter mit 5 Anzapfungen modelliert worden ist, sind das beispielsweise 32 Spannungswerte. Diese Spannungswerte bilden die Basis für die Ermittlung der wahrscheinlichsten gesendeten Folge. Dabei wird von jedem Empfangswert das Quadrat der Abstände zu allen jenen Spannungswerten berechnet, und schließlich jene mögliche Folge mit der niedrigsten Quadratsumme ermittelt. Für eine Beschreibung des Viterbi-Algorithmus sei auf die einschlägige Literatur (z. B.: G. D. Forney: The Viterbi Algorithm, Proceedings of the IEEE, Vol. 61, No.3, Seiten 268 ff) verwiesen.

Die in diesem Zusammenhang erforderliche Ermittlung des Streckenmodells geschieht durch Korrelation des Empfangssignals. So wird bei Systemen mit kontinuierlicher Übertragung das Signal laufend mit verzögerten Abbildern seiner selbst korreliert, während bei diskontinuierlicher Übertragung jedes Impulsbündel eine dem Empfänger bekannte Folge (Sync.-Wort, Präambel) enthält, die über einen entsprechend programmierten Korrelator ebenfalls das Streckenmodell liefert.

Die Erfindung besteht nun darin, in einem digitalen Übertragungssystem mit Viterbi-Demodulation zum Zwecke eines Diversity-Empfangs die verschiedenen Empfangssignale nach erfolgter Umsetzung gemeinsam in einem Viterbi-Demodulator zu verarbeiten. Dazu benötigt jeder Empfänger zur Ermittlung des jeweiligen Streckenmodells einen eigenen Korrelator. Von den (Transversalfilter-) Modellen jedes Empfangsweges werden wieder die möglichen Ausgangsspannungswerte ermittelt und zusammengehörige Spannungswerte unter derselben Adresse abgelegt. Im Verlauf der Übertragung werden nun von den bei den verschiedenen Empfängern anfallenden Signalwerten wie bisher die Quadrate der Abstände zu deren abgelegten Spannungswerten berechnet und unter gleicher Adresse entstandene Quadrate der verschiedenen Empfangswege für die weitere Viterbi-Verarbeitung zu einem Summenwert zusammengefaßt. Dieser Vorgang entspricht energetisch einer kohärenten Addition der verschiedenen Empfangssignale, weshalb auf diese Weise der maximal mögliche Diversity-Gewinn erzielbar ist.

Die Fig zeigt einen Kobinator für 2 Empfangssignale (auch mehr als 2 sind möglich) im Blockschaltbild. Voraussetzung ist die gleiche Nachricht in verschiedenen Kanälen. Die unterschiedlichen Kanäle lassen sich auf mindestens zweierlei Art realisieren, nämlich mit Antennen-Diversity und Frequenz-Diversity.

Die Empfangssignale der beiden Signalwege werden dabei zunächst jeweils einem Umsetzer 1,2 zugeführt, in denen eine Umsetzung ins Basisband oder in eine geeignete Zwischenfrequenz erfolgt. Mit den Umsetzern 1,2 ist jeweils ein Korrelator 3,4 in Reihe geschaltet, die die Impulsantwort des betreffenden Kanals ermitteln. Aus der Impulsantwort des Kanals werden die möglichen Momentanwerte der jeweiligen Eingangssignale berechnet und in einer nachfolgenden Metrik-Tabelle 5,6 abgespeichert. Dieser Vorgang - Korrelation und Metrik-Berechnung - kann einmalig, vor der Übertragung erfolgen oder auch laufend zur laufenden Korrektur. Die Ausgänge der Umsetzer 1,2 sowie der Metrik-Tabellen 5,6 sind mit einem Viterbi-Demodulator 7 verbunden.

## Ansprüche

Kombinator für die Empfangssignale verschiedener Signalwege einer digitalen Funk-, insbesondere Mobilfunkeinrichtung, bei dem die einzelnen Empfangssignale nach der üblichen Frequenzumsetzung gemeinsam demoduliert werden, **dadurch gekennzeichnet,** daß in jedem Signalweg in Reihe mit einem Frequenzumsetzer ein Korrelator und nachfolgend eine Metrik-Tabelle eingeschaltet ist zur Ermittlung des jeweiligen Streckenmodells der im Empfänger als Transversalfilter modellierten Strecke, indem von den Modellen jedes Empfangsweges die möglichen Ausgangsspannungswerte ermittelt und zusammengehörige Spannungswerte unter derselben Adresse abgelegt werden und im Verlauf der Übertragung von den bei den verschiedenen Empfängern anfallenden Signalwerten die Quadrate der Abstände zu deren abgelegten Spannungswerten berechnet und unter gleicher Adresse entstandene Quadrate der verschiedenen Empfangswege für die weitere Verarbeitung in einem Viterbi-Demodulator zu einem Summenwert zusammengefaßt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | IEEE INTERNATIONAL CONFERENCE ON COMMUNICATIONS, San Francisco, 16. - 18. Juni 1975, Band 1, Seiten 5.1-5.5, IEEE, New York, US; A.A. GIORDANO et al.: "Error rate performance comparison of MLSE and decision feedback equalizer on rayleigh fading multipath channels" * Seite 5.1, linke Spalte, Zeilen 1-5; Seite 5.2, linke Spalte, letzter Abschnitt - rechte Spalte, Abschnitt 1 * --- | 1 | H 04 L 1/02 |
| A | US-A-3 815 028 (RABOW) * Spalte 5, Zeile 5 - Spalte 6, Zeile 17 * --- | 1 | |
| A | NATIONAL TELECOMMUNICATIONS CONFERENCE 1980, Houston, Texas, 30. November - 4. Dezember 1980, Band 3, Seiten 58.6.1-58.6.5, IEEE, New York, US; R.R. KURTH: "Frequency-uncertain fading channel reception of diversity FSK transmissions" * Seite 58.6.3, rechte Spalte, letzter Abschnitt - Seite 58.6.4, linke Spalte, Abschnitt 1 * ----- | 1 | |

RECHERCHIERTE SACHGEBIETE (Int. Cl.5)

H 04 L
H 04 B

Der vorliegende Recherchenbericht wurde für alle Patentansprüche erstellt

| Recherchenort | Abschlußdatum der Recherche | Prüfer |
|---|---|---|
| DEN HAAG | 09-05-1990 | HOLPER G.E.E. |